# EUROPÄISCHE PATENTSCHRIFT

(11) **EP 1 762 759 B1**
(45) Veröffentlichungstag und Bekanntmachung des Hinweises auf die Patenterteilung: **02.03.2011**
(21) Anmeldenummer: 06018520.4
(22) Anmeldetag: 05.09.2006
(51) Int. Cl.: F16K 3/18, F16K 51/02

(54) **Ventilmechanik für ein Vakuumventil**
Control mechanism for a vacuum valve
Mécanisme de commande pour une soupape à vide

(30) Priorität: 12.09.2005 DE 102005043595
(43) Veröffentlichungstag der Anmeldung: 14.03.2007
(73) Patentinhaber: Bösch, Hubert, 6890 Lustenau (AT)
(72) Erfinder: Bösch, Hubert, 6890 Lustenau (AT)
(74) Vertreter: Riebling, Peter

(56) Entgegenhaltungen:
- CH-A- 402 537
- DE-A1- 2 601 120
- DE-A1- 10 025 615
- DE-C- 636 317
- JP-A- 2001 090 849
- US-A- 5 722 636
- US-A1- 2002 139 954

## Beschreibung

Gegenstand der Erfindung ist eine Ventilmechanik für ein Vakuumventil nach dem Oberbegriff des Patentanspruches 1 oder 2.

Derartige Vakuumventile werden bevorzugt für den Verschluss von Durchgangsöffnungen in Vakuumanlagen verwendet.

Die Verwendung in Vakuumanlagen ist jedoch nur ein bevorzugtes Ausführungsbeispiel, und die Erfindung ist hierauf nicht beschränkt. Eine solche Ventilmechanik kann auch für andere, zwangsgeführte Ventile verwendet werden, wie z. B. für Absperrschieber in flüssigkeitsführenden Leitungen und dergleichen mehr.

Eine bekannte Ventilmechanik geht auf den gleichen Anmelder in Form der EP 662 575 B1 zurück. Bei dieser bekannten Druckschrift wird eine Abrollbewegung des Ventiltellers über fest montierte Lagerachsen erreicht, was mit einem erhöhten Aufwand verbunden ist. Die dort gezeigten Lagerachsen sind jedoch nicht so hoch belastbar wie frei geführte Rollen, die lagerlos in entsprechenden Aufnahmen geführt sind.

Ein Beispiel für lagerlos geführte Achsen (später auch als rollenartige Wälzkörper bezeichnet) zeigt die JP-2001090849 A.

Bei dieser bekannten Ventilmechanik sind drei gegeneinander verschiebbare kreisförmige Platten vorhanden zwischen denen frei geführte Kugeln als Wälzkörper vorhanden sind.

Auf einer drehend angetriebenen ersten Platte sind am Umfang verteilt angeordnete, schräg ansteigende Nuten eingearbeitet, in denen Kugeln verschiebbar geführt sind. Diese Kugeln greifen in zugeordnete und den Nuten in der ersten Platte gegenüberliegende Nuten einer zweiten mittleren Platte ein. Auf der gegenüberliegenden Seite dieser mittleren Platte sind wiederum Nuten mit darin verschiebbar geführten Kugeln gelagert, die in zugeordnete Nuten einer dritten Platte eingreifen. Diese dritte Platte ist schließlich die Ventilplatte (Ventilteller) die sich - entsprechend der Drehlage der anderen beiden Platten - an den Durchgang im Gehäuse abdichtend anlegt oder sich von diesem abhebt.

Diese Führungen weisen jedoch gravierende Nachteile auf: Sie sind offen gestaltet, und die Kugeln können herausfallen, wenn aus irgendeinem Grund wie einer Störung, Vibration, Schlag, Fehlfunktion, Federbruch oder ähnliches, die aufnehmenden Platten nicht gegeneinandergedrückt werden. Dieses Problem tritt auch auf, wenn das Gegeneinanderdrücken der Platten nur ganz kurzzeitig aus dem Eingriff ist und nur soviel Zeit lässt, dass das Eigengewicht der Kugeln diese aus ihrer vorgesehenen Nut und Position fallen lässt.

Normalerweise ist das Schließen mit hohen Kräften beaufschlagt, weil die Dichtung an den Sitz im Gehäuse angepresst werden muss, und weil außerdem eine Druckdifferenz gegen den Teller wirken kann, was sich zu den Dichtkräften addiert. Eine solche Druckdifferenz kann aber auch in die umgekehrte Richtung wirken und den Teller geschlossen halten. Dann ist dieses System überhaupt nicht brauchbar. Die Teile hängen aus, der Schieber geht zu Bruch mit teilweise hohem Schaden.

Das eingangs erwähnte EP 0662 575 B1 hat ähnliche Führungen mit geschlossenen Nuten, allerdings laufen darin einseitig gelagerte Bolzen. Diese Lager müssen aus Gründen des Platzbedarfs relativ klein gehalten werden, sodass sie hart an der Grenze der Belastbarkeit arbeiten.

Die JP-2001090849 A und auch die US 2002/0139954 A1 offenbaren jedoch bereits jeweils eine Ventilmechanik nach dem Oberbegriff des Patentanspruches 1 und 2.

Aufgabe der Erfindung ist es eine Ventilmechanik für ein Vakuumventil nach dem Gegenstand der JP-2001090849 A bzw. der US 2002/0139954 A1 vorzuschlagen, bei dem das Öffnen mit ebenso hohen Kräften wie das Schließen erfolgen kann und dass die Wälzkörper störungsfrei und verschiebungsgesichert gehalten sind.

Zur Lösung der gestellten Aufgabe ist die Erfindung durch die technische Lehre des Anspruches 1 oder 2 gekennzeichnet.

Grundlegendes Merkmal der Erfindung ist, dass mindestens zwei gegeneinander verschiebbare Teile vorhanden sind, wobei das eine Teil die Antriebsplatte und das andere Teil der Teller ist, dass ferner in der Antriebsplatte mindestens eine Nut eingearbeitet ist, die sich mit einer hierzu komplementären Nut in dem benachbarten Teller ergänzt und überlappt und dass im Überlappungsbereich zwischen diesen beiden, komplementär sich ergänzenden Nuten jeweils ein rollenförmiger Wälzkörper angeordnet ist.

Mit der gegebenen technischen Lehre ergibt sich der wesentliche Vorteil, dass es nun erstmals möglich ist, mit zwei gegeneinander verschiebbaren Teilen eine hohe Andrückkraft zur Herstellung der Dichtungswirkung und mit gleicher Kraft eine Abhebebewegung zum Öffnen des Ventils zu ermöglichen, ohne dass die Gefahr besteht, dass die Wälzkörper sich in ihren Aufnahmen verschieben oder gar verloren gehen.

Wichtig bei der Erfindung ist, dass die sich ergänzenden Nuten in dem einen Teil, sowie im benachbarten anderen Teil geschlossen sind und somit die Wälzkörper nach oben und nach unten gegen Herausfallen oder unbeabsichtigte Verschiebung gesichert sind. Die geschlossenen Nuten erlauben deshalb nur ein Eingreifen der Wälzkörper in Richtung deren axialen Längserstreckung Ein solches Merkmal lässt sich aus der genannten JP 20011090849 A nicht entnehmen.

Die hier vorgeschlagenen Walzen sind keine in sich gelagerten Teile mit Kugeln, Innen- und Außenring, sondern lediglich frei geführte Wälzkörper ohne Verwendung einer weiteren Mechanik. Daher sind diese bei gleichem Außendurchmesser wesentlich höher belastbar.

Damit besteht der Vorteil, dass eine in sich geschlossene Nut - wie es die Erfindung vorschlägt - gleichstark die Kräfte beim Schließen und beim Öffnen überträgt.

Die Erfindung ermöglicht demgemäss sehr hohe Dichtkräfte und auch sehr hohe Ablösekräfte.

Solche Ablösekräfte werden außerdem benötigt, wenn nach sehr langem Geschlossensein die Dichtung, die in der Regel eine Elastomere-Dichtung ist, erhebliche Adhäsionskräfte entwickelt, welche beim Öffnungsvorgang überwunden werden müssen.

Ein besonderer Vorteil der Erfindung ist, dass im einfachsten Fall keine Rückzugsfedern benötigt werden, denn die Wälzkörper sind vollständig zwangsgeführt in zugeordneten Aufnahmen zwischen den Nuten eingeschlossen und werden sowohl in Richtung der Dichtabhebebewegung als auch in Gegenrichtung zwangsgeführt.

Im Übrigen ist die Erfindung nicht darauf beschränkt, dass die Wälzkörper als Rollenkörper von der einen Seite der Anordnung bis zur anderen Seite hindurchgehen.

In einer anderen Ausgestaltung der Erfindung kann es vorgesehen sein, dass die Wälzkörper nur stückweise als Rollen oder dergleichen vorhanden sind und beispielsweise nicht von der einen zur anderen Seite des Ventils über die gesamte Breite hin durchgehen und werkstoffeinstückig miteinander verbunden sind.

Ebenso ist die Erfindung nicht darauf beschränkt, rundzylindrische Wälzkörper zu verwenden. Es können auch andere Formen verwendet werden, wie insbesondere dreiecksförmige Körper, die mit abgerundeten sphärischen Flächen ebenfalls eine gerade Abrollbewegung ermöglichen.

Nachdem die Kräfte auf die Wälzkörper wesentlich kleiner sind als beispielsweise bei der eigenen EP 0 662 575 B1 genügt es, für das Material der Wälzkörper ein handelsübliches und relativ kostengünstiges Metallmaterial zu verwenden.

Aus dem gleichen Grund ist es nicht notwendig, die Nutenführungen der Wälzkörper als gehärtete Laufflächen auszubilden.

Als Lagerelement für die Nuten verwendet die Erfindung vorzugsweise einen Laufwagen, der in horizontale Richtung angetrieben ausgebildet ist. Die Art des Antriebes wird in der vorliegenden Erfindung nicht näher beschrieben. Dieser Antrieb ist im Stand der Technik bekannt. Es wird auf die Offenbarung in der EP 0 662 575 B1 verwiesen, deren Inhalt von der vorliegenden Offenbarung umfasst sein soll.

Es ist im Übrigen nicht lösungsnotwendig, dass der Laufwagen mit insgesamt vier Lagerrollen arbeitet. Es können auch andere Abwälzlager verwendet werden, wie insbesondere Tonnenlager und dergleichen mehr.

In der späteren Beschreibung wird dieser Laufwagen auch als Antriebsplatte bezeichnet, weil es sich um einen plattenförmigen Körper handelt, der mit zugeordneten Rollen auf einer Lauffläche in einem Gehäuse verschiebbar angetrieben ist.

Hierbei ist wesentlich, dass der auf dem Laufwagen gelagerte Teller in Form einer Nutenführung längsgeführt ist, wobei diese Nutenführung am Ende eine Abhebebewegung des Tellers in Richtung auf den Dichtungssitz des Tellers erzwingt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine erste Ausführungsform einer Ventilmechanik in einem Vakuumventil;
- Figur 2:: Draufsicht auf die Nut zur Zwangsführung des Tellers;
- Figur 3:: ein Schnitt gemäß der Linie III-III in Figur 1;
- Figur 4:: ein vergrößerter Schnitt durch ein Detail der Führung des Wälzkörpers in den Nuten;
- Figur 5:: ein Schnitt durch ein zweites Ausführungsbeispiel einer Ventilmechanik mit einem Teller und einem Gegenteller;
- Figur 6:: Schnitt gemäß der Linie VI-VI;
- Figur 7:: Mehrere Ausführungsbeispiele für komplementär sich ergänzende Nuten;
- Figur 8:: der Bewegungsablauf beim gegeneinander verschieben der sich ergänzenden Nuten.
- Figur 9:: Perspektivische Ansicht des Tellers mit Wälzkörpern in auseinander gezogener Darstellung
- Figur 10:: Vergrößerte Darstellung nach Figur 9

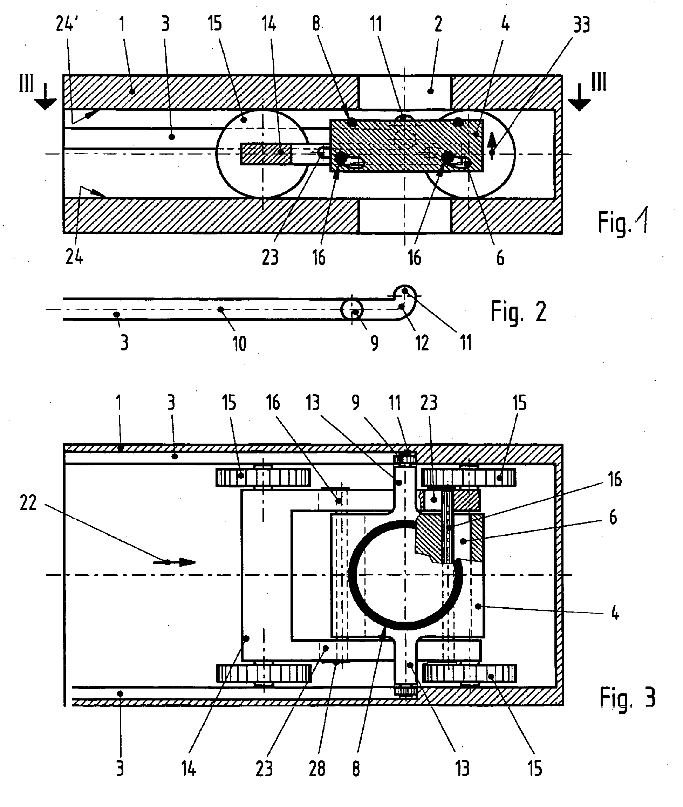

In Figur 1 ist allgemein eine Ventil mechanik in einem Vakuumventil dargestellt, wobei in einem Gehäuse 1 eine vertikal durchgehende Ventilöffnung 2 angeordnet ist, die durch den Teller 4 mit Hilfe eines Dichtungselementes 8 verschließbar ist.

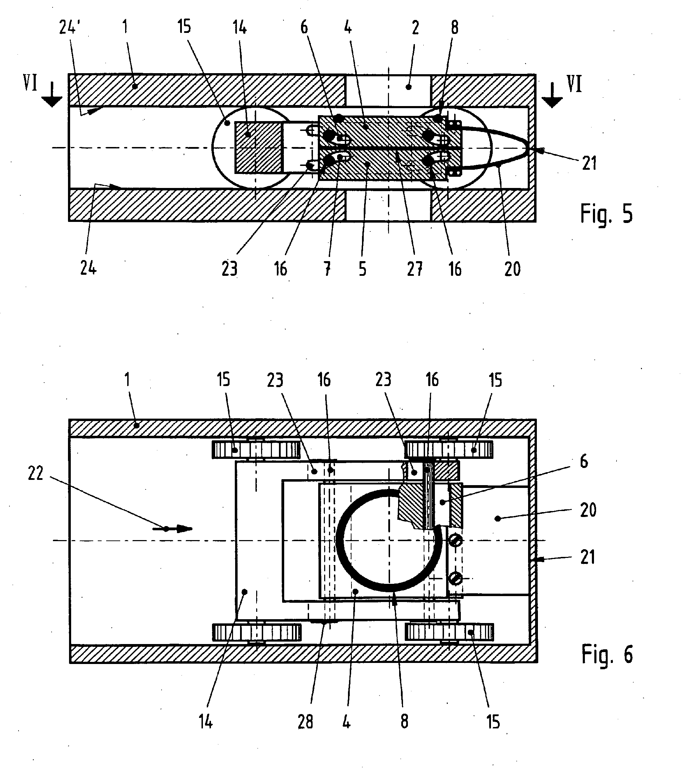

Der in Figur 1 und 3 dargestellte Schieber besteht im Wesentlichen aus einer Antriebsplatte 14, die in Pfeilrichtung 22 und in Gegenrichtung hierzu (siehe auch Figur 6) verschiebbar angetrieben ist.

Der Bewegungsablauf des Tellers 4 wird z. B. in Figur 1 mit Hilfe einer am Ende gebogenen Nut 3 bewerkstelligt, wobei diese Nut 3 auf beiden Seiten im Gehäuse 1 eingearbeitet ist. In diese Nut 3 greifen auf beiden Seiten Wälzlager 9 ein.

Die Nut 3 und ihre Funktion ist in Figur 2 deutlicher ersichtlich. Das Lager 9 bewegt sich ausschließlich entlang der Achse 10, die am vorderen Ende einen senkrecht zur Hauptrichtung verlaufenden Teil 11 aufweist, und dazwischen ist vorzugshalber zur Erzielung eines weichen Bewegungsablaufs ein Radius 12 eingearbeitet. Es versteht sich, dass das in dieser Nut laufende Lager etwas Luft bekommt, damit es sich wie vorgesehen auf der Lauf-Fläche abrollen kann. Das Lager 9 ist mit dem Teller 4 über die Pratzen 13 einstückig oder auch fix verbunden.

Das Lager 9 hat ausschließlich steuernde Funktionen, es wird durch die Dichtkräfte oder durch die Ablösekräfte in keiner Weise belastet und kann daher sehr klein gehalten werden. Es trägt lediglich die Eigengewichte der an ihm hängenden Teile wie den Teller 4.

Die Antriebsplatte 14 weist mehrere Lagerungen 15 auf, die sie in der Antriebsebene beweglich, aber sonst in keiner Achse verschiebbar machen.

Die Lagerungen 15 sind hierbei als Rollen ausgebildet, die sich auf zugeordneten Laufflächen 24 ab der Innenseite des Gehäuses 1 abrollen

Je nach Einbaulage des gesamten Gehäuses 1 wird entweder dann die untere Lauffläche 24 oder auch die gegenüberliegende Lauffläche 24' als Ablauffläche für die Lagerungen 15 verwendet.

Um nun eine Abhebebewegung in Richtung auf den Dichtsitz für den Teller 4 zu ermöglichen (s. Pfeilrichtung 33 in Figur 1) ist die erfindungsgemäße Zwangsführung mit den Wälzkörpern 16 vorgesehen.

Die Wälzkörper 16 sind als rund profilierte Rollen oder als Stifte durchgehend (über die gesamte Breite des Tellers 4) ausgebildet (s. Figur 3). Das jeweils äußerste Ende jedes Wälzkörpers 16 greift in eine zugeordnete Steuerungsnut 23 im Bereich der Antriebsplatte 14 ein.

Auf diese Weise wird eine formschlüssige Verbindung zwischen den beiden Nuten 6, 23 über die dort jeweils eingreifenden Stummel des Wälzkörpers 16 erreicht.

Es wurde bereits schon im allgemeinen Beschreibungsteil darauf hingewiesen, dass es nicht lösungsnotwendig ist, dass der Wälzkörper 16 sich über die gesamte Breite der Anordnung erstreckt. Es kann auch vorgesehen sein, dass diese Lagerung aus zwei fluchtend zueinander angeordneten und nicht miteinander verbundenen Wälzkörpern besteht. Somit kann der Wälzkörper 16 auch in der Mitte unterbrochen sein und es sind dann zwei Wälzkörperteile vorhanden, die genau fluchtend zueinander in dem Teller 4 gehalten sind.

Solche Anordnungen mit geteilten Wälzkörpern 16 werden insbesondere bei großen Nennweiten von Vakuumventilen bevorzugt.

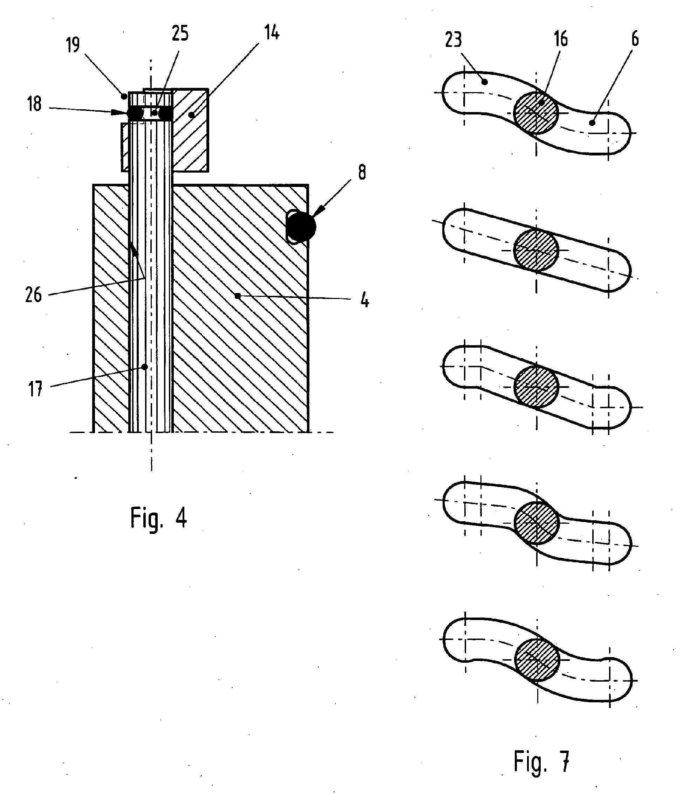

Die Form der Nuten 6 und 7 wird vorzugsweise gebogen hergestellt, es können aber auch andere Formen gewählt werden wie schräg mit gleichbleibendem Winkel, schräg mit 2 Winkeln und einem Übergangsradius dazwischen, schräg und im Bereich der hohen Kräfte gerade, mit und ohne kleine Einkerbungen zur Einrastung der Endstellung. Ein Beispiel für solche unterschiedliche Nutenformen zeigt die Figur 7. Die Nuten sind in senkrechter Richtung zu ihrer Längserstreckung mit umlaufenden Begrenzungswänden versehen. Dies gilt auch für die oberen und unteren Stirnseiten, die durch den jeweiligen Nutengrund gebildet sind. Es ist deshalb nur ein Eingriff der Wälzkörper in senkrechter Ebene zur Ebene der Längserstreckung der Nuten möglich.

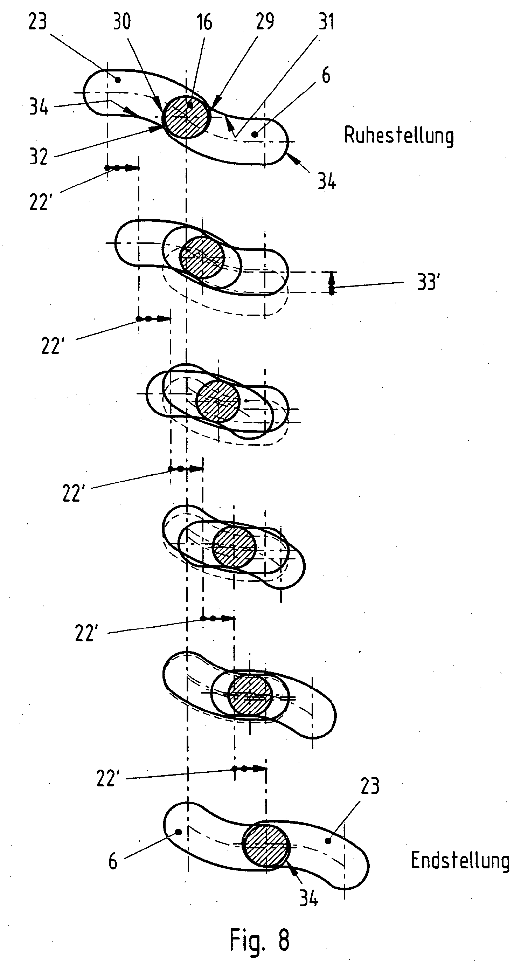

In Figur 7 ist erkennbar, dass die einander zugeordneten und komplementär ausgebildeten Nuten 6, 23 sich jeweils mit Ihrem Nutengrund überlappen. Im Einzelnen ist in Figur 8 dargestellt, dass die Steuerungsnut 23 in der Antriebsplatte 14 einen Nutengrund 29 aufweist, der die eine Seite einer Aufnahmeöffnung 32 bildet, deren andere Seite durch den Nutengrund 30 der komplementär hierzu angeordneten Nut 6 im Teller 4 gebildet wird.

Auf diese Weise wird eine vollständige, den Wälzkörper 16 umschließende, Aufnahmeöffnung 32 gebildet. Der Wälzkörper ist somit mit geringem Spiel in der Aufnahmeöffnung 32 gehalten.

Die verschiedenen Ausführungsformen in Figur 7 zeigen, dass die Nuten nicht einfach nur bogenförmige Kurven sein können, es können auch winkelförmige Abbiegungen vorhanden sein oder es können gerade Nuten 6, 23 in geneigter Anordnung (2. Bild von oben) vorhanden sein.

Ebenso ist es möglich, eine stetige Abbiegung im Bereich des Nutverlaufes zu ermöglichen. Es ist dabei wichtig, dass auch die Nuten 23 in der Antriebsplatte 14 in gleicher Form, jedoch in Berücksichtigung der Funktion um 180° gedreht eingearbeitet werden (komplementäre Formgebung).

Unterschiedliche Formen würden unterschiedliche Abwälzungen ergeben, was zwar möglich, aber nicht vorzuziehen ist, weil dann der Reibungswinkel der Wälzkörper 16 zu ihren Auflageflächen 34 eine Rolle zu spielen beginnt, während bei geometrisch gegengleicher Nut 6, 23 die wandernden Berührungspunkte (Laufflächen 31, 34) grundsätzlich immer genau gegenüber am Außendurchmesser der Wälzkörper 16 zu liegen kommen. Dadurch bewegen sich die Wälzkörper 16 grundsätzlich immer exakt zwischen zwei parallelen Flächen, auch wenn diese gebogen sind.

Hieraus ergibt sich die optimale Lastübertragung zwischen den Wälzkörpern und den zugeordneten Berührungspunkten im Bereich der Laufflächen 31, 34.

Für das Ausführungsbeispiel in Figur 8, das die Berührungspunkte beim Öffnen des Ventils zeigt, gelten die äquivalenten Überlegungen wie für den Schließvorgang, nur dass dann die Berührungspunkte sich an den - bezüglich der eingezeichneten Laufflächen 31 und 34 - gegenüberliegenden Laufflächen befinden.

Wie vorstehend anhand der Figur 3 erläutert, liegen die beiden im Abstand und parallel zueinander geführten Wälzkörper 16 in parallelen einen gegenseitigen Abstand zueinander aufweisenden Nuten 6 des Tellers 4.

Nach einer Weiterbildung der Erfindung ist es nun vorgesehen, dass die Bewegung der parallelen und im Abstand zueinander angeordneten Wälzkörper 16 synchronisiert wird. Zu diesem Zweck wird ein Synchronisierungsblech 36 verwendet, welches auf jeweils einer Seite des Tellers 4 angeordnet ist und zwar im Zwischenraum zwischen der jeweiligen äußeren Seitenfläche des Tellers 4 und der gegenüberliegenden Fläche der Antriebsplatte 14.

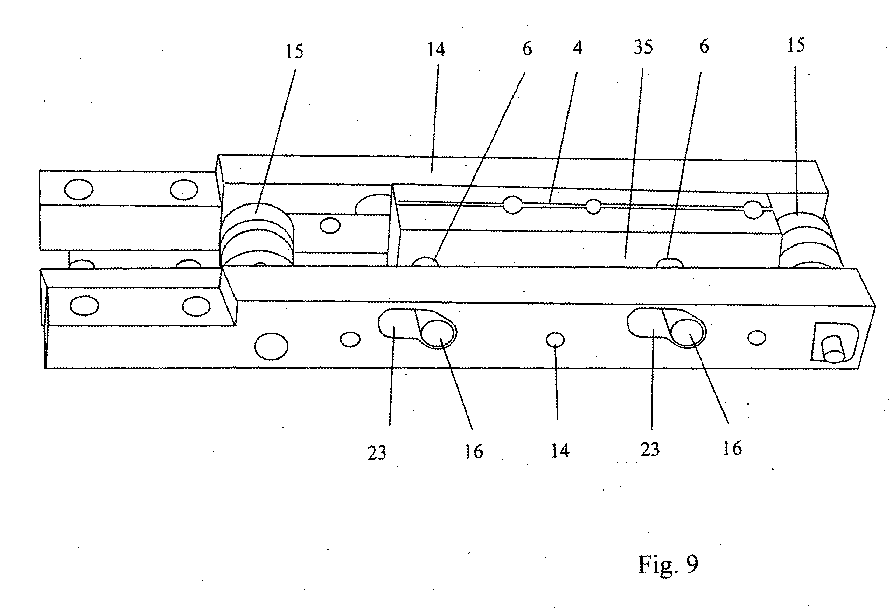

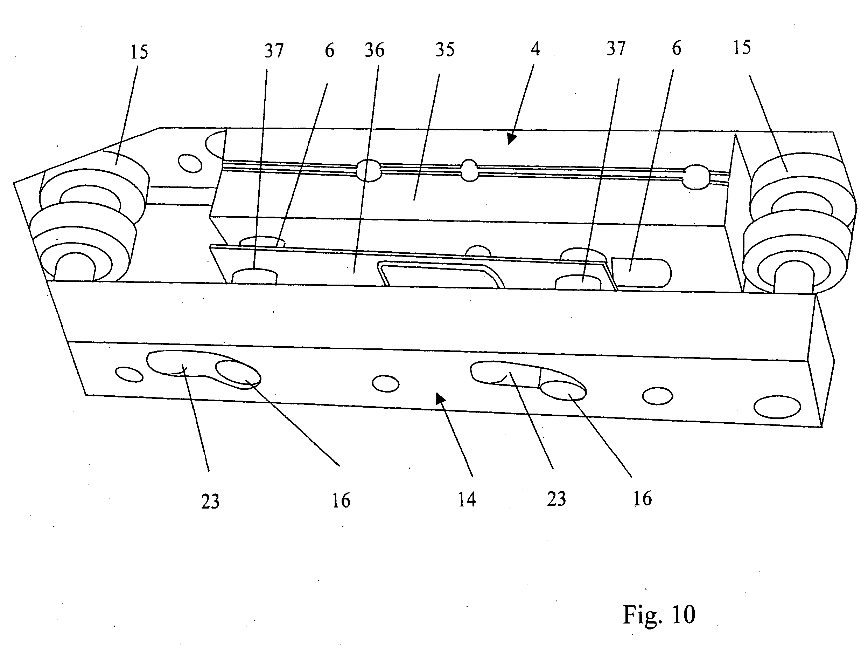

Gemäß Figur 3 ist dort ein Spalt (Abstand 35 in Figur 9, 10) eingezeichnet, der nun erfindungsgemäß von diesem Synchronisierungsblech 36 ausgefüllt wird, welches mit Abstand und mit Spiel in diesen Spalt eingreift.

*Jeweils das Ende des jeweiligen Wälzkörpers 16 greift somit durch dieses Synchronisierungsblech* 36 *hindurch,* so *dass das Synchronisierungsblech* 36 *die Enden der Wälzkörper auf der linken und rechten Seite des Tellers 4 jeweils aufnimmt und führt.*

Damit wird eine absolute Parallelführung der beiden Wälzkörper 16 auf jeder Seite des Tellers 4 erreicht.

Sinngemäß gilt diese Synchronisiereinrichtung mit Synchronisierblechen auch für die Ausführungsform nach Figur 5, wo die doppelte Anzahl von Wälzkörpern gezeigt ist.

Auch für diesen Fall ist vorgesehen, dass die jeweils auf einer Seite angeordneten Wälzkörper in Laufrichtung vorne und hinten durch das Synchronisierblech hindurchgreifen, so dass auch hier - in diesem Ausführungsbeispiel - die in Laufrichtung vorne und hinteren Wälzkörper immer synchron durch das dazwischengeschaltete Synchronisierblech verschoben werden.

In Figur 4 ist ein weiteres Ausführungsbeispiel für die vorher erwähnten Wälzkörper 16 dargestellt.

Diese Wälzkörper 17 können - wie in Figur 4 gezeigt - an einer oder mehreren Stellen eine Nut 25 aufweisen, die einen federnden Körper aufnimmt. In der Zeichnung ist das ein O-Ring 18. An der gegenüberliegenden Stelle in der Antriebsplatte 14 ist dann eine Ausnehmung 19, welche dafür sorgt, dass der O-Ring 18 nur auf einer Seite (Lauffläche 26) leicht angedrückt wird.

Durch eine solche Vorrichtung ist sichergestellt, dass die Wälzkörper 17 immer auf eine Seite gedrückt werden, auch wenn aufgrund von fertigungstechnisch notwendigen Toleranzen etwas Spiel gelassen werden muss. Die Vorrichtung mit dem O-Ring 25 nach Figur 4 kann, muss aber nicht, in der Ausführungsform nach Figur 5 und 6 entfallen, weil dort bereits ein Federelement 20 dafür sorgt, dass die Wälzkörper 16 mit leichter Vorspannung dieser Federn 20 gegen die korrespondierenden Flächen in den Nuten 6 und 7 gedrückt werden.

Außerdem wird in Figur 5 und 6 das Federelement als Anschlag 21 für die vordere Stellung benützt. Ein solches Federelement kann wie hier gezeichnet als Blattfeder zur Anwendung kommen, es können aber auch Konstruktionen mit Spiralfedern, Tellerfedern oder anderen federnden Elementen verwendet werden, die auch den Teller 4 gegen den Gegenteller 5 oder gegen die Antriebsplatte 14 drücken.

Die Verwendung eines Gegentellers 5 hat den Vorteil, dass beim Ventilschluss nicht nur mit dem Dichtungselement 8 die obere Ventilöffnung 2 verschlossen wird, sondern darüber hinaus mit dem Gegenteller 5 auch die untere Ventilöffnung.

Ein Antrieb mit seinen notwendigen Elementen wurde in allen Zeichnungen weggelassen, weil er für die vorliegende Erfindung gänzlich unwichtig ist. Es muss lediglich vorausgesetzt werden, dass an der Antriebsplatte 14 eine Antriebskraft in Pfeilrichtung 22 und in Gegenrichtung ansetzt.

In Figur 8 ist ein Bewegungsablauf der zwei gegeneinander sich verschiebenden Nuten 6, 23 näher dargestellt.

Hierbei ist erkennbar, dass in der Ruhestellung ein Überlappungsbereich zwischen den sich ergänzenden Nuten 6, 23 vorhanden ist, der eine Aufnahmeöffnung 32 bildet. Dieser Überlappungsbereich wurde bereits schon vorher durch den jeweiligen sich gegenüberstehenden Nutengrund 29 und 30 der jeweiligen Nut 6 und 23 charakterisiert.

Sobald nun eine Verschiebungskraft auf die Steuerungsnut 23 in Pfeilrichtung 22 erfolgt, verschiebt sich diese Nut 23 nach rechts, so lange bis das Wälzlager 9 über den Radius 12 in den Teil 11 der Nut 3 gelangt und hierbei der Teller 4 sich in Pfeilrichtung 33 anhebt.

Gleichzeitig bleibt die Nut 6 stehen, weil sich der Teller 4 nur in Pfeilrichtung 33 nach oben bewegen kann und hierbei verschiebt sich der Wälzkörper 16 im Bereich der Nut 6 nach oben und im Bereich der Steuerungsnut 23 nach hinten.

Dies ist in der zweiten und dritten Abbildung in Figur 8 dargestellt. Dort hat sich die Steuerungsnut 23 um die Teilstrecke 22' (z.B. um einen Betrag von 6 mm) bei (horizontal stillstehender) Nut 6 nach rechts bewegt. Dabei wird die Nut 6 in Pfeilrichtung um die Teilstrecke 33' vertikal angehoben. In der Ruhestellung und in der Endstellung (oberste und unterste Abbildung in Figur 8) ergibt die Aufnahmeöffnung 32 eine runde Öffnung zur Aufnahme des Wälzkörpers 16 oder 17.

In den Zwischenstellungen öffnet sich die Aufnahmeöffnung 32 zu einem Oval. In der Endstellung nach der untersten Darstellung in Figur 8 hat sich dann die Steuerungsnut 23 ganz nach rechts bei horizontal feststehender Nut 6 bewegt. Dabei wurde der maximale vertikale Hub in Pfeilrichtung 33 auf die in der Aufnahmeöffnung lagernden Wälzkörper ausgeübt.

In der Endstellung ist somit die weitestgehende Anhebebewegung des Tellers 4 am Dichtungssitz dargestellt, weil sich der Wälzkörper 16 am Nutengrund 34 der Nut 6, d. h. also an deren äußersten Ende befindet. Das Bewegungsbild der Figur 8 macht auch deutlich, dass der umgekehrte Vorgang (Verschiebung der Steuerungsnut 23 nach links aus der untersten Stellung in Figur 8) zu einer Abhebebewegung des Tellers 4, 5 vom Dichtsitz führt. Weil die Wälzkörper stets in der Aufnahmeöffnung 32 von allen Seiten umschlossen sind (formschlüssige Führung) erfolgt demnach auch die Abhebebewegung - genauso wie die Anhebewegung in Pfeilrichtung 33 - zwangsgesteuert und spielfrei.

Der besseren Übersichtlichkeit halber wurde im Ausführungsbeispiel nach Figur 5 und 6 die Nut im Gegenteller 5 als Nut 7 bezeichnet, die jedoch die gleiche Funktion aufweist wie die Nut 6 im Teller 4.

In diesem Ausführungsbeispiel bildet sich dann bei der Abhebebewegung des Tellers 4 in Richtung auf den Dichtungssitz der Ventilöffnung 2 ein Spalt 27 zwischen Teller 4 und Gegenteller 5 aus.

Die Rückstellung in die in Figur 5 dargestellte Ruhelage erfolgt durch das Federelement 20 in umgekehrter Reihenfolge. Das Federelement dient nur zur Überbrückung der notwendigen Spiele.

Die Ausführungsform nach Figur 5 und 6 zeigt, dass auch eine Nut mit einem als Anschlag 11 dienenden Teil entfallen kann und stattdessen als Anschlag 21 das Federelement 20 selbst dienen kann.

Die Wälzkörper 16, 17 sind im Übrigen gegen Herausfallen in Richtung ihrer Längserstreckung durch außen liegende Anschläge 28 an der Antriebsplatte 14 geschützt.

Wichtig ist, dass die Zuordnung der Wälzkörper in den Nuten 6, 23 gemäß der obersten Abbildung in Figur 8 (Ruhestellung) in dem gesamten Bewegungsablauf gleich bleibt, und die Antriebsplatte 14 mit ihren Wälzlagern 9 außer Eingriff mit dem Teil 11 ist und im Bereich der Achse 10 der Nut 3 sich befindet.

Während dieser Längsverschiebung erfolgt also eine stabile Zuordnung der Wälzkörper 16, 17 in der Ruhestellung gemäß Figur 8 (oberste Abbildung).

Der Vorteil der Erfindung liegt darin, dass die Verbindung zwischen der Antriebsplatte 14 und dem Teller 4 (sowie gegebenenfalls dem Gegenteller 5) zwei sich ergänzende Nuten 6, 23 (die komplementär zueinander ausgebildet sind) durch die Stummel von (walzen- oder rollenförmigen) Wälzkörpern 16, 17 überbrückt werden, um so eine formschlüssige Führung zwischen Antriebsplatte 14 und Teller 4, 5 zu erreichen. Hierbei ist vorteilhaft, dass die Nuten jeweils seitlich geschlossen sind, d. h. es kann nicht passieren, dass die Wälzkörper 16, 17 aus den Nuten herausfallen, wie dies beim Stand der Technik der Fall war.

Figur 9 zeigt eine perspektive Darstellung des Tellers 4 mit den Wälzkörpern 16, die sich in den Nuten 23 der Antriebsplatte 14 abwälzen.

Der besseren Übersichtlichkeit wegen sind die beiden stangenförmigen zueinander parallelen Teile der Antriebsplatte 14 auseinander gezogen, um den im Zwischenraum befindlichen Teller 4 besser darstellen zu können.
Im wirklichen Betrieb sind die Teile 4 und 14 mit engem Abstand 35 ausgebildet.

Die Figur 10 zeigt noch eine vergrößerte Darstellung der Figur 3 wobei als zusätzliches Teil ein Synchronisierungsblech 36 dargestellt ist, das zwei Bohrungen 37 aufweist, die mit Lagerspiel von den Wälzkörpern 16 durchgriffen sind. Durch das Synchronisierungsblech 36 erfolgt somit eine Synchronisierung der Bewegung der im parallelen Abstand zueinander angeordneten Wälzkörper 16. Wird der in Laufrichtung vorne liegende Wälzkörper 16 in seiner Lage in den Nuten 6, 23 verändert, wird dank des Synchronisierungsbleches 36 auch der in Laufrichtung hinten liegende Wälzkörper 16 mitgenommen.

### Zeichnuncislegende

- 1: Gehäuse
- 2: Ventilöffnung
- 3: Nut
- 4: Teller
- 5: Gegenteller
- 6: Nut
- 7: Nut
- 8: Dichtungselement
- 9: Wälzlager
- 10: Achse
- 11: Teil
- 12: Radius
- 13: Pratze
- 14: Antriebsplatte
- 15: Lagerung
- 16: Wälzkörper
- 17: Wälzkörper
- 18: O-Ring
- 19: Ausnehmung
- 20: Federelement
- 21: Anschlag
- 22: Pfeilrichtung 22' Teilstrecke
- 23: Steuerungsnut
(Antriebsplatte)
- 24: Lauffläche 24'
- 25: Nut
- 26: Lauffläche
- 27: Spalt
- 28: Anschlag
- 29: Nutgrund (Steuerungsnut 23)
- 30: Nutgrund (Steuerungsnut 6)
- 31: Lauffläche
- 32: Aufnahmeöffnung
- 33: Pfeilrichtung 33' Teilstrecke
- 34: Nutgrund Endstellung
- 35: Abstand
- 36: Synchronisierungsblech
- 37: Bohrungen

## Patentansprüche

1. Ventilmechanik, wobei ein bewegbarer Teller (4) zum Abdichten einer Ventilöffnung (2) in einem Gehäuse (1) vorgesehen ist, und bezüglich der Sitzfläche des Ventils im wesentliche parallele (22) und senkrechte (33) Bewegungen des Tellers (4) während des Öffnens und Schließens erfolgen, wobei die Bewegung des Tellers (4) in die parallele Richtung (22) mit einer verschiebbar angetriebenen Antriebsplatte (14) erfolgt und die Bewegung des Tellers (4) in die senkrechte Richtung (33) das Anpressen oder Abheben des Tellers (4) von der Ventilsitzfläche, bewirkt, wobei für die Bewegung des Tellers (4) in die senkrechte Richtung eine Kulissenführung vorgesehen ist, und wobei die Kulissenführung aus in der Antriebsplatte (14) eingearbeiteten Nuten (23) besteht, die sich mit jeweils hierzu komplementären Nuten (6, 23) in dem Teller (4) ergänzen und überlappen und wobei im Überlappungsbereich zwischen diesen beiden Nuten (6, 23) jeweils ein rollen- oder walzenförmiger Wälzkörper (16, 17) angeordnet ist, und wobei die Nuten (6, 23) geschlossen sind und nur das Eingreifen der Wälzkörper (16, 17) in Richtung deren axialen Längserstreckung erlauben, und wobei die Antriebsplatte (14) Lagerungen (15) aufweist, die sie in der Antriebsebene (22) beweglich, aber sonst in keiner Achse verschiebbar machen, **dadurch gekennzeichnet, dass** der auf der Antriebsplatte (14) gelagerte Teller (4) in Form einer Nutenführung mit Nut (3, 11, 12) und Lager (9) auf beiden Seiten im Gehäuse (1) längsgeführt ist, wobei diese Nutenführung (3, 11, 12) am Ende eine Abhebebewegung des Tellers (4) in Richtung auf den Dichtungssitz des Tellers (4) erzwingt, und wobei das Lager (9) ausschließlich steuernde Funktionen hat und lediglich die Eigengewichte der an ihm hängenden Teile wie den Teller (4) trägt.

2. Ventilmechanik, wobei mehrere bewegbare Teller (4, 5) zum Abdichten einer Ventilöffnung (2) in einem Gehäuse (1) vorgesehen sind, und bezüglich der Sitzfläche des Ventils im wesentlichen parallele (22) und senkrechte (33) Bewegungen jedes Tellers (4, 5) während des Öffnens und Schließens erfolgen, wobei die Bewegung eines Tellers (4, 5) in die parallele Richtung (22) mit einer verschiebbar angetriebenen Antriebsplatte (14) erfolgt und die Bewegung des Tellers (4, 5) in die senkrechte Richtung (33) das Anpressen oder Abheben des Tellers von der Ventilsitzfläche bewirkt, wobei für die Bewegung des Tellers (4, 5) in die senkrechte Richtung eine Kulissenführung vorgesehen ist, wobei die Kulissenführung aus in der Antriebsplatte (14) eingearbeiteten Nuten (23) besteht, die sich mit jeweils hierzu komplementären Nuten (6, 7, 23) in dem Teller (4, 5) ergänzen und überlappen und dass im Überlappungsbereich zwischen diesen beiden Nuten (6, 7, 23) jeweils ein rollen- oder walzenförmiger Wälzkörper (16, 17) angeordnet ist, **dadurch gekennzeichnet dass** dem einen Teller (4) ein paralleler Gegenteller (5) zugeordnet ist, sodass beim Ventilschluss nicht nur der eine Teller (4) mit dem Dichtungselement (8) die eine Ventilöffnung (2) verschließt, sondern darüber hinaus mit dem Gegenteller (5) auch die andere Ventilöffnung, dass ein Federelement (20) die Wälzkörper (16, 17) mit leichter Vorspannung gegen die korrespondierenden Flächen in den Nuten (6, 7, 23) drückt und dass das Federelement (20) den vorderen Anschlag für die Antriebsplatte (14) bildet.

3. Ventil mechanik nach Anspruch 1 oder 2, **dadurch gekennzeichnet, dass** die Wälzkörper (16, 17) achslos und frei geführt sind.

4. Ventilmechanik nach Anspruch 2 oder 3, **dadurch gekennzeichnet, dass** die Nuten (6, 7, 23) geschlossen sind und nur das Eingreifen der Wälzkörper (16, 17) in Richtung deren axialen Längserstreckung erlauben, und wobei die Antriebsplatte (14) Lagerungen (15) aufweist, die sie in der Antriebsebene (22) beweglich, aber sonst in keiner Achse verschiebbar machen.

5. Ventilmechanik nach einem der Ansprüche 1 bis 4, **dadurch gekennzeichnet, dass** die Nut (23) in der Antriebsplatte (14) einen Nutengrund (29) aufweist, der die eine Seite einer Aufnahmeöffnung (32) bildet, deren andere Seite durch den Nutengrund (30) der komplementär hierzu angeordneten Nut (6) im Teller (4) gebildet ist, und dass Wälzkörper (16, 17) mit geringem Spiel in der Aufnahmeöffnung (32) gehalten ist.

6. Ventilmechanik nach einem der Ansprüche 1 bis 5, **dadurch gekennzeichnet, dass** die Nuten (23) in der Antriebsplatte (14) in gleicher Form, jedoch um 180° gedreht zu den Nuten (6, 7) im Teller (4, 5) ausgebildet sind.

7. Ventilmechanik nach einem der Ansprüche 1 bis 6, **dadurch gekennzeichnet, dass** die Wälzkörper (17) an einer oder mehreren Stellen eine Nut (25) aufweisen, die einen ein O-Ring (18) aufnimmt und dass an der gegenüberliegenden Stelle in der Antriebsplatte (14) eine Ausnehmung (19) vorgesehen ist, welche dafür sorgt, dass der O-Ring (18) nur auf einer Seite an eine Lauffläche (26) der Antriebsplatte (14) für die Wälzkörper (17) leicht angedrückt ist.

8. Ventilmechanik nach einem der Ansprüche 1 bis 7, **dadurch gekennzeichnet, dass** die Wälzkörper (16, 17) gegen Herausfallen in Richtung ihrer Längserstreckung durch außen liegende Anschläge (28) an der Antriebsplatte (14) gesichert sind.

9. Ventilmechanik nach einem der Ansprüche 1 bis 8, **dadurch gekennzeichnet, dass** die Bewegung der in Laufrichtung vorne liegenden Wälzkörper (16, 17) mit der Bewegung der in Laufrichtung hinten liegenden Wälzkörper (16, 17) synchronisiert ist.

## Claims

1. Valve mechanism, wherein a movable disc (4) is provided to seal a valve opening (2) in a housing (1), and substantially parallel (22) and perpendicular (33) movements of the disc (4) take place during opening and closing with respect to the seat surface of the valve, the movement of the disc (4) taking place in the parallel direction (22) with a displaceably driven drive plate (14) and the movement of the disc (4) in the perpendicular direction (33) bringing about the pressing on or lifting of the disc (4) from the valve seat surface, a link guide being provided for the movement of the disc (4) in the perpendicular direction, and wherein the link guide consists of grooves (23) worked into the drive plate (14), which are supplemented by grooves (6, 23), which are complementary to this, in the disc (4) and overlap, and wherein a respective roller-shaped or cylindrical roller body (16, 17) is arranged between these two grooves (6, 23) in the overlap region, and wherein the grooves (6, 23) are closed and only allow the engagement of the roller bodies (16, 17) in the direction of their axial longitudinal extent, and wherein the drive plate (14) has bearings (15), which make it movable in the drive plane (22), but otherwise not displaceable in any axis, **characterised in that** the disc (4) mounted on the drive plate (14) is longitudinally guided in the form of a groove guide with a groove (3, 11, 12) and bearing (9) on both sides in the housing (1), this groove guide (3, 11, 12), at the end, forcing a lifting movement of the disc (4) in the direction of the sealing seat of the disc (4) and the bearing (9) exclusively having controlling functions and only carrying the specific weights of the parts suspended thereon such as the disc (4).

2. Valve mechanism, wherein a plurality of movable discs (4, 5) are provided to seal a valve opening (2) in a housing (1) and substantially parallel (22) and perpendicular (33) movements of each disc (4, 5) take place during opening and closing with respect to the seat surface of the valve, the movement of one disc (4, 5) taking place in the parallel direction (22) with a displaceably driven drive plate (14) and the movement of the disc (4, 5) in the perpendicular direction (33) bringing about the pressing on or lifting of the disc from the valve seat surface, a link guide being provided for the movement of the disc (4, 5) in the perpendicular direction, wherein the link guide consists of grooves (23) worked into the drive plate (14), which are supplemented by grooves (6, 7, 23) which are complementary to this, in each case, in the plate (4, 5) and overlap, and in that a roller-shaped or cylindrical roller body (16, 17) is arranged in each case in the overlap region between these two grooves (6, 7, 23), **characterised in that** a parallel counter-disc (5) is associated with one disc (4), so, during the valve closure, not only does one disc (4) with the sealing element (8) close one valve opening (2), but the other valve opening is also closed with the counter-disc (5), **in that** a spring element (20) presses the roller body (16, 17) with slight prestressing against the corresponding surfaces in the grooves (6, 7, 23) and **in that** the spring element (20) forms the front stop for the drive plate (14).

3. Valve mechanism according to claim 1 or 2, **characterised in that** the roller bodies (16, 17) are guided freely and without a shaft.

4. Valve mechanism according to claim 2 or 3, **characterised in that** the grooves (6, 7, 23) are closed and only allow the engagement of the roller bodies (16, 17) in the direction of their axial longitudinal extent, and wherein the drive plate (14) has bearings (15), which makes it movable in the drive plane (22), but otherwise not displaceable in any axis.

5. Valve mechanism according to any one of claims 1 to 4, **characterised in that** the groove (23) in the drive plate (14) has a groove base (29), which forms the side of a receiving opening (32), the other side of which is formed by the groove base (30) of the groove (6) arranged complementary thereto in the disc (4), and **in that** the roller body (16, 17) is held with slight play in the receiving opening (32).

6. Valve mechanism according to any one of claims 1 to 5, **characterised in that** the grooves (23) in the drive plate (14) are configured in the same form, but rotated through 180° with respect to the grooves (6, 7) in the disc (4, 5).

7. Valve mechanism according to any one of claims 1 to 6, **characterised in that**, at one or more points, the roller bodies (17) have a groove (25), which receives an O-ring (18) and **in that** a recess (19), which ensures that the O-ring (18) is only slightly pressed on one side onto a running surface (26) of the drive plate (14) for the rolling bodies (17), is provided at the opposing point in the drive plate (14).

8. Valve mechanism according to any one of claims 1 to 7, **characterised in that** the rolling bodies (16, 17) are secured against falling out in the direction of their longitudinal extent by stops (28) located on the outside of the drive plate (14).

9. Valve mechanism according to any one of claims 1 to 8, **characterised in that** the movement of the roller bodies (16, 17) located at the front in the running direction is synchronised with the movement of the roller bodies (16, 17) located to the rear in the running direction.

## Revendications

1. Mécanisme de soupape dans lequel il est prévu une tête mobile (4) pour l'étanchéité d'une ouverture de soupape (2) dans une enveloppe (1), et des mouvements globalement parallèles (22) et verticaux (33) de la tête (4) ont lieu par rapport à la surface de siège de la soupape pendant l'ouverture et la fermeture, étant précisé que le mouvement de la tête (4) dans le sens parallèle (22) a lieu avec une plaque d'entraînement (14) entraînée pour pouvoir être déplacée et que le mouvement de la tête (4) dans le sens vertical (33) a pour effet d'appliquer la tête (4) contre la surface de siège de soupape ou de la soulever de celle-ci, qu'il est prévu pour le mouvement de la tête (4) dans le sens vertical un guide à coulisse, que le guide à coulisse se compose de rainures (23) qui sont réalisées dans la plaque d'entraînement (14) et qui, par rapport à des rainures complémentaires (6, 23) prévues dans la tête (4), se complètent et se chevauchent, qu'il est prévu dans la zone de chevauchement entre ces deux rainures (6, 23) un corps de roulement (16, 17) en forme de rouleau ou de cylindre, que les rainures (6, 23) sont fermées et permettent seulement l'accouplement des corps de roulement (16, 17) dans le sens de leur extension longitudinale axiale, que la plaque d'entraînement (14) présente des montages sur palier (15) qui lui permettent d'être déplacée dans le plan d'entraînement (22) mais qui, sinon, ne la rendent mobile dans aucun axe, **caractérisé en ce que** la tête (4) montée sur la plaque d'entraînement (14) est guidée longitudinalement sous la forme d'un guide à rainure avec une rainure (3, 11, 12) et un palier (9) des deux côtés de l'enveloppe (1), étant précisé que ce guide à rainure (3, 11, 12) impose à la fin un mouvement de soulèvement de la tête (4) en direction du siège d'étanchéité de la tête (4), et que le palier (9) a uniquement des fonctions de direction et porte seulement les poids propres des éléments accrochés à lui comme la tête (4).

2. Mécanisme de soupape dans lequel il est prévu plusieurs têtes mobiles (4, 5) pour l'étanchéité d'une ouverture de soupape (2) dans une enveloppe (1), et des mouvements globalement parallèles (22) et verticaux (33) de chaque tête (4, 5) ont lieu par rapport à la surface de siège de la soupape pendant l'ouverture et la fermeture, étant précisé que le mouvement d'une tête (4, 5) dans le sens parallèle (22) a lieu avec une plaque d'entraînement (14) entraînée pour pouvoir être déplacée et que le mouvement de la tête (4, 5) dans le sens vertical (33) a pour effet d'appliquer la tête (4) contre la surface de siège de soupape ou de la soulever de celle-ci, qu'il est prévu pour le mouvement de la tête (4, 5) dans le sens vertical un guide à coulisse, que le guide à coulisse se compose de rainures (23) qui sont réalisées dans la plaque d'entraînement (14) et qui, par rapport à des rainures complémentaires (6, 7, 23) prévues dans la tête (4, 5), se complètent et se chevauchent, et qu'il est prévu dans la zone de chevauchement entre ces deux rainures (6, 7, 23) un corps de roulement (16, 17) en forme de rouleau ou de cylindre, **caractérisé en ce qu'**une tête opposée parallèle (5) est associée à la tête (4), de sorte que lors de la fermeture de la soupape, non seulement la première tête (4) ferme une ouverture de soupape (2) avec l'élément d'étanchéité (8), mais l'autre ouverture de soupape est aussi fermée avec la tête opposée (5), **en ce qu'**un élément élastique (20) pousse les corps de roulement (16, 17) avec une légère contrainte contre les surfaces correspondantes dans les rainures (6, 7, 23), et **en ce que** l'élément élastique (20) forme la butée avant pour la plaque d'entraînement (14).

3. Mécanisme de soupape selon la revendication 1 ou 2, **caractérisé en ce que** les corps de roulement (16, 17) sont guidés sans axe et librement.

4. Mécanisme de soupape selon la revendication 2 ou 3, **caractérisé en ce que** les rainures (6, 7, 23) sont fermées et ne permettent que l'accouplement des corps de roulement (16, 17) dans le sens de leur extension longitudinale axiale, et la plaque d'entraînement (14) présente des montages sur palier (15) qui lui permettent d'être déplacée dans le plan d'entraînement (22) mais qui, sinon, ne la rendent mobile dans aucun axe.

5. Mécanisme de soupape selon l'une des revendications 1 à 4, **caractérisé en ce que** la rainure (23) prévue dans la plaque d'entraînement (14) présente un fond de rainure (29) qui forme un côté d'une ouverture de réception (32) dont l'autre côté est formé par le fond de rainure (30) de la rainure (6) complémentaire prévue dans la tête (4), et **en ce que** les corps de roulement (16, 17) sont maintenus avec un faible jeu dans l'ouverture de réception (32).

6. Mécanisme de soupape selon l'une des revendications 1 à 5, **caractérisé en ce que** les rainures (23) de la plaque d'entraînement (14) ont la même forme que les rainures (6, 7) de la tête (4, 5), mais sont tournées de 180° par rapport à celles-ci.

7. Mécanisme de soupape selon l'une des revendications 1 à 6, **caractérisé en ce que** les corps de roulement (17) présentent à un ou plusieurs endroits une rainure (25) qui reçoit un joint torique (18), et **en ce qu'**il est prévu en face, dans la plaque d'entraînement (14), un creux (19) qui garantit que le joint torique (18) ne soit pressé légèrement que d'un côté contre une surface de roulement (26) de la plaque d'entraînement (14) pour les corps de roulement (17).

8. Mécanisme de soupape selon l'une des revendications 1 à 7, **caractérisé en ce que** des butées extérieures (28) prévues sur la plaque d'entraînement (14) empêchent les corps de roulement (16, 17) de tomber dans le sens de leur extension longitudinale.

9. Mécanisme de soupape selon l'une des revendications 1 à 8, **caractérisé en ce que** le mouvement des corps de roulement (16, 17) situés à l'avant, dans le sens de roulement, est synchronisé avec le mouvement des corps de roulement (16, 17) situés à l'arrière, dans le sens de roulement.
